# EUROPÄISCHE PATENTSCHRIFT

(11) **EP 1 432 921 B1**
(45) Veröffentlichungstag und Bekanntmachung des Hinweises auf die Patenterteilung: **31.05.2006**
(21) Anmeldenummer: 02779123.5
(22) Anmeldetag: 24.09.2002
(51) Int. Cl.: F16C 33/20, B32B 15/04, B32B 15/08

(54) **VERFAHREN ZUR HERSTELLUNG EINES MIT EINER GLEITSCHICHT VERSEHENEN METALLISCHEN TRÄGERWERKSTOFFES SOWIE DESSEN VERWENDUNG**
METHOD FOR PRODUCING A METAL BASE MATERIAL PROVIDED WITH A SLIDING LAYER, AND THE USE THEREOF
PROCEDE DE PRODUCTION D'UN SUPPORT METALLIQUE POURVU D'UNE COUCHE DE GLISSEMENT ET SON UTILISATION

(30) Priorität: 26.09.2001 DE 10147292
(43) Veröffentlichungstag der Anmeldung: 30.06.2004
(73) Patentinhaber: Federal-Mogul Wiesbaden GmbH & Co.KG, 65201 Wiesbaden (DE)
(72) Erfinder: ADAM, Achim, 64569 Nauheim (DE); FUCHSBERGER, Stefan, 65343 Eltville (DE); SCHLÜTER, Joachim, 65187 Wiesbaden (DE)
(86) Internationale Anmeldenummer: PCT/DE2002/003607
(87) Internationale Veröffentlichungsnummer: WO 2003/027522

(56) Entgegenhaltungen:
- EP-A- 0 119 815
- WO-A-97/28380
- DE-A- 4 227 909

## Beschreibung

Die vorliegende Erfindung betrifft ein Verfahren zur Herstellung eines mit einer Gleitschicht versehenen metallischen Trägerwerkstoffes mit den Merkmalen des Oberbegriffs des Patentanspruchs 1 sowie die Verwendung derartiger beschichteter Trägerwerkstoffe.

Mit einer Kunststoffgleitschicht versehene metallische Trägerwerkstoffe, die zur Herstellung von Gleit- oder Lagerelementen, wie Buchsen, Halbschalen, Gleitschienen oder Gleitplatten, ungeschmiert oder auch mit zusätzlicher Öl- oder Fettschmierung eingesetzt werden können, sind bekannt.

In der Regel werden bei solchen Gleitelementen Verbundwerkstoffe mit Kunststoffgleitschicht verwendet, die aus einem metallischen Stützgerüst, vorzugsweise aus Stahl, Bronze oder einer hochfesten Aluminiumlegierung, das als gesinterte poröse Oberflächenschicht oder als Gewebe ausgebildet ist, und einer auf dem Metallgerüst so aufgebrachten geschlossenen Kunststoffschicht, daß auch die Zwischenräume der Gerüststruktur vollständig mit dem Kunststoffmaterial gefüllt sind, bestehen. Auch Werkstoffe ohne Gerüststruktur, bei denen eine Kunststoffolie auf ein glattes Trägermaterial aufgeklebt sind, sind bekannt.

Grundsätzlich gibt es zwei wichtige Ausführungsformen von Gleitwerkstoffen, die sich durch die verwendeten Matrix-Kunststoffe und den damit verbundenen unterschiedlichen Funktionsweisen unterscheiden. Einerseits handelt es sich hierbei um Materialien auf der Basis von Polytetrafluorethylen und andererseits um Materialien auf der Basis von Thermoplasten.

Materialien auf der Basis von Thermoplasten, wie beispielsweise POM, PVDF oder PA, gehören zum Stand der Technik. Diese arbeiten nach einer anderen Funktionsweise als die Polytetrafluorethylen-Werkstoffe. Hier sind bei den auf Thermoplasten basierenden Materialien die Schichtdicke meist größer als 50 *µ*m, wobei das metallische Stützgerüst am Gleitprozeß nicht teilnimmt sondern lediglich zur mechanischen Verankerung des Thermoplasten dient. Solche Materialien haben jedoch andere Eigenschaften als die Polytetrafluorethylen-Werkstoffe, sowohl in positiver als auch in negativer Hinsicht. So zeigen diese thermoplastischen Werkstoffe höhere Reibwerte bei Ölschmierung, was ein besonderer Nachteil bei einer hydraulischen Anwendung darstellt, eine schlechtere Umforrnbarkeit, wodurch zum Beispiel die Herstellung von Bundbuchsen oder von Buchsen ohne Metallrücken erschwert wird oder unmöglich ist, während die Möglichkeit zur Nachbarbeitung, zum Beispiel des Bohrens im eingebauten Zustand zum Ausgleich von Gehäusetoleranzen und eine höhere Belastbarkeit und Verschleißbeständigkeit gegeben ist.

Materialien auf der Basis von Polytetrafluorethylen sind wesentlich weicher, daher beruht ihre Funktion normalerweise bei der Abwesenheit von Schmiermitteln bei nennenswerter Belastung, etwa über 1 MPa, auf dem Freiliegen des metallischen Stützgerüstes, so daß dieses als Oberflächenkomponente am Reibkontakt beteiligt ist. Bei solchen Materialien ist beim Einsatz der gebräuchlichen Kunststoffzusammensetzungen eine Ausbildung von Schichten über 50 *µ*m Dicke nicht sinnvoll, da diese Schichten die Belastung nicht ohne zu fließen aufnehmen können. Sie weisen im Gegenteil sogar meist kleinere Schichtdicken um 20 µm auf, die gerade so viel Material enthalten, daß es zur Ausbildung einer Transferschicht auf dem Gegenlaufpartner ausreicht. Überschüssiges Material führt dabei zur Bildung von unerwünschten Verschleißpartikeln während der Einlaufphase und kann bei meist notwendigen Kalibriervorgängen während der Fertigung oder noch während des Einbaus der Gleitelemente zu unerwünschten Materialverschiebungen führen.

Die Herstellung dieser Werkstoffe erfolgt auf relativ einfache Weise, ausgehend von einer Polytetrafluorethylen-Dispersion der entsprechende Zusätze beigemischt werden und die dann durch Koagulation in eine homogene plastische Mischung umgewandelt wird. Die so erzeugte Paste wird dann mittels Walzen auf das bandförmige Vormaterial mit der Gerüststruktur aufgebracht und abschließend gesintert, wie dies beispielsweise in der DE 195 06 684 beschrieben ist, wobei auch hier eine Schichtdicke von 0 - 50 *µ*m angegeben ist.

In der DE 198 08 540 A werden Materialien beschrieben, bei denen die Gleitschicht aus Polytetrafluorethylen mit 10 - 50 % Poly-(p-phenylentephthalamid)(PPTA) bestehen kann, wobei die Schichtdicken dieser Materialien durch Einwalzen in den porösen Untergrund auf 0 - 50 µm begrenzt werden. Zur Herstellung wird hierbei Toluol eingesetzt.

Auch dicke Schichten können auf Basis von Polytetrafluorethylen erzeugt werden, jedoch nach einem vergleichsweise aufwendigen und komplizierten Verfahren. Dieses bekannte Verfahren erfordert zunächst die Herstellung einer Folie aus dem jeweiligen Material, die dann auf das Trägermaterial aufgebracht werden muß. Diese Folien haben im Vergleich zu dem im Pastenverfahren hergestellten Schichten gleicher Zusammensetzung meist bessere mechanische Eigenschaften und höhere Verschleißfestigkeit, da sie von Blöcken geschält werden, die unter effektiveren Bedingungen gesintert sind, als dies beim Sintern der Gleitschichten im Durchlaufofen der Fall ist. Die Folien können als glattes Trägermaterial aufgeklebt oder auch ohne Klebstoff auf ein erhitztes, porösen Stützgerüst aufgebracht werden.

Als Nachteil ist jedoch anzusehen, daß zunächst immer zusätzliche Arbeitsgänge erforderlich sind, nämlich die Herstellung des Sinterblocks und das Schälen der Folie. Wenn zusätzlich noch geklebt werden muß, ist es erforderlich, die Folie darüber hinaus mit einer Lösung von Natrium in Ammoniak oder mit Naphthylnatrium anzuätzen, was aus umwelt- und sicherheitstechnischer Sicht problematisch ist. Das Aufkleben der Folie mittels Klebstoff ist ebenfalls problematisch, da fluorierte Hochtemperaturkleber eingesetzt werden, wobei unter aufrechterhaltenem Preßdruck erhitzt und gekühlt werden muß. In jedem Fall ist die Haftfestigkeit begrenzt, so daß es insbesondere an Schnittkanten leicht zur Ablösung der Schicht kommt.

Ergänzend zum Stand der Technik wird noch darauf hingewiesen, daß in der DE 44 30 474 ein verfahren erwähnt wird, bei dem eine aus überwiegend Thermoplast bestehende Folie in einen porösen Untergrund eingearbeitet wird, während die EP 0 877 867 die Herstellung einer Thermoplastschicht durch Aufstreuen eines Pulvers und anschließendes Aufschmelzen und Glattwalzen beschreibt. Thermoplastschichten sind bislang tragfähiger als Polytetrafluorethylenschichten und können deshalb dicker hergestellt und bei Bedarf auch nachgearbeitet werden. In der US 5,019,308 wird ein Verfahren zur Herstellung dickerer Schichten vorgeschlagen, bei dem eine Mischung aus Polytetrafluorethylen und den Füllstoffen zunächst auf eine Kunststoff-Folie aufgetragen und vorgetrocknet wird, um dann in einem nächsten Verfahrensschritt auf das eigentliche metallische Substratmaterial übertragen zu werden. Dieses Verfahren ist aber umständlich und somit kostenintensiv, da es einen zusätzlichen Prozeßschritt erfordert und darüber hinaus die angegebenen Zusammensetzungen keine tragfähigen Schichten ergeben.

Der vorliegenden Erfindung liegt die Aufgabe zugrunde, ein Verfahren zur Herstellung eines mit einer Gleitschicht versehenen metallischen Trägerwerkstoffes zur Verfügung zu stellen, mit dem Gleitelemente mit einer tragfähigen, auf Polytetrafluorethylen basierenden, mehr als 50 µm dicken Gleitschicht erzeugt werden können, die eine ausreichend hohe Standzeit und somit eine verschleißfeste, bei Bedarf nachzuarbeitende Gleitschicht besitzen.

Diese Aufgabe wird erfindungsgemäß durch ein Verfahren mit den kennzeichnenden Merkmalen des Patentanspruchs 1 gelöst.

Das erfindungsgemäße Verfahren zur Herstellung eines mit einer Gleitschicht versehenen Trägerwerkstoffes, der als Gleitelement verwendet wird, sieht vor, daß der Trägerwerkstoff mit einer Paste des Gleitschichtmaterials, das neben einem Fluorpolymeren auf Basis von Polytetrafluorethylen noch mindestens ein Hochtemperaturpolymeres enthält, beschichtet wird. Hiernach wird der so beschichtete Trägerwerkstoff einer thermischen Behandlung unterworfen. Auf den Trägerwerkstoff wird bei dem erfindungsgemäßen Verfahren eine solche Paste aufgetragen, die als Fluorpolymeres zwischen 40 Vol. % und 75 Vol. % Polytetrafluorethylen (PTFE) oder Polytetrafluorethylen (PTFE) mit Zusätzen anderer Fluorpolymeren und zwischen 60 Vol. % und 25 Vol. % des mindestens einen Hochtemperaturpolymeren aufweist, wobei sich die zuvor angegebenen Konzentrationen auf die Gesamtzusammensetzung der fertigen Gleitschicht beziehen. Als Hochtemperaturpolymeren werden solche eingesetzt, deren Schmelzpunkt nicht unterhalb 327°C liegt, wenn sie überwiegend kristallin sind, oder deren Glasübergangstemperatur nicht unterhalb 327°C liegt, wenn sie überwiegend amorph sind. Durch die Wahl der erfindungsgemäßen Komponenten mit dem erfindungsgemäßen Anteil ist es möglich geworden, Gleitschichten von mehr als 50 µm Dicke mittels einer Paste herzustellen.

Somit unterscheidet sich das zuvor beschriebene erfindungsgemäße Verfahren vom Stand der Technik dahingehend, daß hierbei das so hergestellte Gleitelement eine Gleitschichtdicke aufweist, die größer als 50 *µ*m ist, wobei die Gleitschicht eine spezielle Zusammensetzung bezüglich ihrer polymeren Matrix aufweist, dahingehend, daß hier als Fluorpolymeres diese polymere Matrix 40 Vol. % bis 75 Vol. % des Polytetrafluorethylens (PTFE) oder des mit anderen Fluorpolymeren versetzten Polytetrafluorethylens (PTFE) und 60 Vol. % bis 25 Vol. % des mindestens einen Hochtemperaturpolymeren umfaßt. Hierbei sollte die Gesamtmenge an PTFE vorzugsweise 40 Vol.-% nicht unterschreiten.

Somit werden bei dem erfindungsgemäßen Verfahren als Fluorpolymeres insbesondere Polytetrafluorethylen (PTFE) allein oder Polytetrafluorethylen (PTFE) in Mischung mit anderen Fluorpolymeren, insbesondere auch mit anderen Fluorthermoplasten, verwendet, wobei der Schmelzpunkt dieser Thermoplasten vorzugsweise über 260°C liegt.

Das nach dem erfindungsgemäßen Verfahren hergestellte Gleitelement weist bezüglich seiner Gleitschicht hervorragende Eigenschaften auf. So ist zunächst festzuhalten, daß eine nach dem erfindungsgemäßen Verfahren hergestellte Gleitschicht selbst bei hohen Schichtdicken, d.h. insbesondere bei Schichtdicken, die über 50 *µ*m liegen und vorzugsweise bis 500 *µ*m variieren, hochverschleißfest ist, was insbesondere darin zum Ausdruck kommt, daß sie bei hohen Belastungen, die vorzugsweise zwischen 1 MPa und 70 MPa liegen, eine extrem geringe Verschleißrate zeigen, verglichen mit gleich dicken Gleitschichten, die nach herkömmlichen Verfahren hergestellt worden sind. Diese hohe Verschleißfestigkeit der nach dem erfindungsgemäßen Verfahren erstellten Gleitschicht wird darauf zurückgeführt, daß durch den vergleichsweise hohen Anteil fest eingebundener Partikel aus hochtemperaturbeständigen Polymeren eine Verstärkung erzeugt und die Druck- und Scherfestigkeit so weit erhöht wird, daß die Gleitschicht ohne zu fließen die Lasten aufnimmt und darüber hinaus die zugesetzten Partikel an der Gleitschichtoberfläche eine den Abrasivverschleiß mindernde Wirkung haben.

Auch findet bei der nach dem erfindungsgemäßen Verfahren hergestellten Gleitschicht durch die vorliegende mechanische Verankerung kein unerwünschtes Ablösen der Gleitschicht von dem metallischen Trägerwerkstoff statt, wie dies bei dem eingangs beschriebenen bekannten Folienbeschichtungsverfahren möglich ist.

Desweiteren lassen sich die nach dem erfindungsgemäßen Verfahren hergestellten Gleitschichten nacharbeiten, um so eine erforderliche Paßgenauigkeit zwischen den im Reibkontakt befindlichen Teilen auch nachträglich noch herstellen zu können, was bei den nach den bekannten Verfahren erstellten Gleitschichten auf Polytetrafluorethylen-Basis nicht möglich ist. Bedingt durch die relativ hohe Schichtdicke der nach dem erfindungsgemäßen Verfahren erstellten Gleitschicht wird während der Benutzung des Gleitelementes ein Kontakt des metallischen Trägerwerkstoffes mit dem porösen Sintergerüst während der Benutzung der Gleitelemente wirksam verhindert, was sich wiederum in einer Schonung der Wellenoberfläche ausdrückt.

Selbst bei extrem hohen Schichtdicken, d.h. bei Schichtdicken bis zu 500 *µ*m, zeigt die nach dem erfindungsgemäßen Verfahren auf den metallischen Trägerwerkstoff aufgebrachte Gleitschicht kein Fließen bei einer entsprechenden Belastung, was bei den nach den bekannten Verfahren hergestellten Gleitelementen vielfach insbesondere auch bei höheren Schichtdicken der Fall ist, so daß derartige Gleitelemente nur bedingt verwendbar sind. Insbesondere ist als weiterer Vorteil herauszustellen, daß das erfindungsgemäße Verfahren als einstufiges Verfahren im Vergleich zu dem bekannten Folien-Beschichtungsverfahren einen wesentlich geringeren Produktionsaufwand verursacht, so daß dementsprechend die Erstellungskosten der nach dem erfindungsgemäßen Verfahren erstellten Gleitelemente reduziert sind.

Auch ermöglicht das erfindungsgemäße Verfahren in besonders einfacher Weise, Gleitelemente mit unterschiedlichen und auf die jeweiligen Anforderungen angepaßte Schichtdicken zu erstellen, wobei die Variationsmöglichkeiten der Gleitschichtzusammensetzung dadurch besonders im Vergleich zu den bekannten Folien-Beschichtungsverfahren vervielfacht wird, daß bei dem erfindungsgemäßen Verfahren nicht in einem separaten Arbeitsschritt zunächst eine Folie erstellt werden muß, die zudem noch teilweise durch Ätzen modifiziert und desweiteren in einem aufwendigen Klebeverfahren auf den metallischen Trägerwerkstoff aufgebracht wird, da bei dem erfindungsgemäßen Verfahren lediglich eine Paste in der gewünschten Zusammensetzung und der erforderlichen Schichtdicke auf den metallischen Trägerwerkstoff aufgetragen wird.

Wie dies bereits vorstehend bei dem erfindungsgemäßen Verfahren herausgestellt wurde, weist der nach dem erfindungsgemäßen Verfahren mit der Paste versehene Trägerwerkstoff eine solche Gleitschicht auf, deren Dicke vorzugsweise zwischen 51 *µ*m und 500 *µ*m und insbesondere zwischen 100 *µ*m und 300 *µ*m variiert. Dies bedeutet auf das erfindungsgemäße Verfahren bezogen, daß bei dieser bevorzugten Ausführungsform des erfindungsgemäßen Verfahrens soviel pastenförmiges Gleitschichtmaterial auf den Trägerwerkstoff aufgebracht wird, daß die zuvor beschriebenen Gleitschichtdicken resultieren, wobei sich alle hier angegebenen Gleitschichtdicken stets auf die anwendungsfertigen Gleitelemente beziehen. Die so hergestellten Gleitelemente weisen die Gleitschicht in einer solchen, zuvor konkretisierten Dicke auf, daß sie einerseits sehr verschleißfest ist und daß andererseits sichergestellt werden kann, daß hier derartige Gleitelemente noch entsprechend bearbeitet, so zum Beispiel geschliffen oder gebohrt, werden können, um die erforderliche und erwünschte Paßgenauigkeit herzustellen.

Eine weitere Ausführungsform des erfindungsgemäßen Verfahrens sieht vor, daß auf den Trägerwerkstoff eine solche Paste aufgetragen wird, die zwischen 55 Vol. % und 70 Vol. % Polytetrafluorethylen (PTFE) oder Polytetrafluorethylen mit Zusätzen von anderen Fluorpolymeren und zwischen 45 Vol. % und 30 Vol. % des mindestens einen Hochtemperaturpolymeren, jeweils bezogen auf die Gesamtzusammensetzung der fertigen Gleitschicht, aufweist. Insbesondere bei einem derart hergestellten Gleitelement sind die eingangs beschriebenen Vorteile der nach dem erfindungsgemäßen Verfahren hergestellten Gleitelemente in besonderer Weise vorhanden, d.h. ein Trägerwerkstoff, der mit der zuvor beschriebenen polymeren Matrix beschichtet ist, weist eine sehr hohe Verschleißfestigkeit auch unter extremen Belastungen auf.

Bezüglich des bei dem erfindungsgemäßen Verfahren eingesetzten Hochtemperaturpolymeren ist festzuhalten, daß hier grundsätzlich jedes Hochtemperaturpolymere verwendbar ist, sofern es in Verbindung mit dem Polytetrafluorethylen (PTFE) oder dem mit Zusätzen von anderen Fluorpolymeren versehenen Polytetrafluorethylen die zuvor beschriebenen dicken Gleitschichten bei einem pastösen Auftragen auf den jeweiligen Trägerwerkstoff ergibt.

Besonders bevorzugt ist es, wenn für das erfindungsgemäße Verfahren ein solches Hochtemperaturpolymeres, insbesondere auch ein Hochtemperaturthermoplast, ausgesucht wird, dessen Schmelzpunkt bei überwiegend kristallinem Anteil oder dessen Glasübergangstemperatur bei überwiegend amorpher Struktur nicht unterhalb des Polytetrafluorethylens (PTFE) liegt. Es wird hierbei angenommen, daß es beim Abkühlen eine wesentliche Rolle spielt, ob das Polytetrafluorethylen (PTFE) oder das Hochtemperaturpolymere zuerst fest wird.

Zwei Effekte können dabei eine Rolle spielen und so eine Verstärkungswirkung beeinflussen: Die Volumenkontraktion beim Phasenübergang führt bei niedrigen Schmelzpunkten des Hochpolymeren zu Mikrohohlräumen und so zu einem Verlust an Festigkeit. Wird umgekehrt Polytetrafluorethylen (PTFE) beim Abkühlen später fest, tritt der gegenteilige Fall ein, nämlich ein stärkerer Grenzflächenkontakt. Ein weiterer Effekt ergibt sich aus der Oberfläche der Hochpolymeren. Aufgrund der Oberflächenspannung werden die Hochpolymeren im niedrigviskosen Zustand Tröpfchen mit glatten Oberflächen bilden, so daß beim Abkühlen des Polytetrafluorethylens (PTFE) der Grenzflächenkontakt minimiert ist, was zur schlechteren Einbindung der Hochpolymeren in der Matrix führt. Werden die Hochpolymeren früher fest, ergeben sich zumindestens bei kristallinen Stoffen wieder günstigere, unregelmäßigere Oberflächen.

Vorzugsweise wird bei dem erfindungsgemäßen Verfahren als Fluorpolymer reines Polytetrafluorethylen (PTFE) oder eine Mischung von Polytetrafluorethylen (PTFE) mit Poly(tetrafluorethylen-co-perfluorvinylmethylether (PFA), Poly(tetrafluorethylen-co-hexafluorpropylen (FEP), Poly(hexafluorisobutylen-covinylidenfluorid)(CM-1), Poly(ethylen-alttetrafluorethylen (ETFE) und/oder Polyvinylidenfluorid (PVDF) eingesetzt, wobei immer ein überwiegender Anteil aus Polytetrafluorethylen (PTFE) bestehen muß und der Gesamtanteil an Polytetrafluorethylen (PTFE) in der Schicht nicht unter 40 Vol. % betragen darf.

Als besonders bevorzugte Zusammensetzung haben sich Anteile von bis zu 30 Vol. % von Poly(tetrafluorethylen-co-perfluorvinylmethylether (PFA) und Poly(tetrafluorethylen-co-hexafluorpropylen (FEP), bezogen auf die Menge der Fluorpolymeren, ergeben. Mit anderen Worten ist es bei dem erfindungsgemäßen Verfahren möglich, als Fluorpolymer sowohl Polytetrafluorethylen (PTFE) allein oder eine Mischung aus Polytetrafluorethylen (PTFE) mit den zuvor genannten bevorzugten Fluorpolymeren einzusetzen.

Um dauerhafte, nicht fließende und relativ dicke Gleitschichten auf den jeweiligen metallischen Trägerwerkstoffen zu erzeugen, sieht eine weitere vorteilhafte Ausgestaltung des erfindungsgemäßen Verfahrens vor, daß als Fluorpolymer ein solches Polymer ausgewählt wird, daß bis zu 70 Vol. % Polytetrafluorethylen und bis zu 30 Vol. % Poly(tetrafluorethylen-co-perfluorvinylmethylether (PFA), Poly(tetrafluorethylen-co-hexafluorpropylen (FEP), Poly(hexafluorisobutylen-covinylidenfluorid)(CM-1), Poly(ethylen-alttetrafluorethylen (ETFE) und/oder Polyvinylidenfluorid (PVDF) enthält. Hierbei beziehen sich diese, zuvor wiedergegebenen Konzentrationsangaben auf den Fluorpolymeranteil in der Schicht, der, wie bereits eingangs beim erfindungsgemäßen Verfahren dargelegt ist, zwischen 40 Vol. % und 75 Vol. %, bezogen auf die Gesamtzusammensetzung in der gesamten Schicht, variieren kann.

Insbesondere wird bei dem erfindungsgemäßen Verfahren eine solche Paste des Gleitschichtmaterials auf den Trägerwerkstoff aufgetragen, die als Hochtemperaturpolymeres Polyphenylensulfon (PPSO₂), Polyetheretherketon, vollaromatische Polyimide, vollaromatische Polyester und/oder vollaromatische Polyamide, vorzugsweise Poly-(p-phenylenterephthalamid) (PPTA), Polyaramid (TWA) und/oder Poly-(p-benzamid) (PBA) aufweist. Hierbei können die zuvor genannten Hochtemperaturpolymere wahlweise als Einzelstoffe oder auch als Mischung von Hochtemperaturpolymeren bei dem erfindungsgemäßen Verfahren verwendet werden.

Um bei dem erfindungsgemäßen Verfahren die entsprechende Paste des Gleitschichtmaterials, die auf den metallischen Trägerwerkstoff aufgetragen wird, in einfacher Weise und reproduzierbar herzustellen, sieht eine vorteilhafte Weiterbildung des erfindungsgemäßen Verfahrens vor, daß hierbei zur Herstellung der Paste eine Polymerdispersion in einem wäßrigen Dispergiermittel verwendet wird, wobei die Korngröße der zugesetzten Hochtemperaturpolymeren insbesondere zwischen 1 und 500 *µ*m, vorzugsweise zwischen 5 und 250 *µ*m variieren sollte.

Um durch das erfindungsgemäße Verfahren Gleitelemente zu erzeugen, deren Gleitschichten auf die jeweiligen Anforderungen angepaßt sind, sieht eine vorteilhafte Weiterbildung des erfindungsgemäßen Verfahrens vor, daß hierbei der metallische Trägerwerkstoff mit einer solchen Paste beschichtet wird, die bis zu 35 Vol. % an verschleißmindernden Zusätzen, bezogen auf die Gesamtschichtzusammensetzung, enthält, wobei die Konzentration an Polytetrafluorethylen (PTFE) bzw. dessen Mischung mit anderen Fluorpolymeren und insbesondere die Konzentration an Polytetrafluorethylen (PTFE) 40 Vol. %, bezogen auf die Gesamtschichtzusammensetzung, nicht unterschreiten soll. Mit anderen Worten wird somit bei dieser Ausführungsform des erfindungsgemäßen Verfahrens eine solche Paste des Gleitschichtmaterials auf den metallischen Trägerwerkstoff aufgetragen, die sicherstellt, daß die hieraus erstellte Schicht mindestens 40 Vol. % des Fluorpolymeren (PTFE oder Mischung mit anderen Fluorpolymeren), bis zu maximal 35 Vol. % verschleißmindernder Zusätze und mindestens 25 Vol. % des mindestens einen Hochtemperaturpolymeren enthält, wobei durch Variation der zuvor genannten mindestens drei Bestandteile die Eigenschaften der Gleitschicht eines derartig hergestellten Gleitelementes unproblematisch und reproduzierbar einstellbar sind.

Insbesondere wird bei dem erfindungsgemäßen Verfahren als Paste eine solche Paste auf den Trägerwerkstoff aufgetragen, die als verschleißmindernde Zusätze Metallsulfide, vorzugsweise Molybdänsulfid und/oder Wolframsulfid, Graphit, Bornitrid, vorzugsweise hexagonales Bornitrid, Eisen-III-Oxid, Bariumsulfat und/oder Kohlefasern enthält. Durch das Zumischen des jeweils ausgewählten verschleißmindernden Zusatzes sowie durch dessen Konzentration zu der erfindungsgemäßen Paste und durch Abstimmung der Anteile von Fluorpolymeren sowie des mindestens einen Hochtemperaturpolymeren lassen sich in einfacher Weise die jeweils erwünschten Eigenschaften, insbesondere die Verschleißfestigkeit, das Fließverhalten, d.h. die selbsttragenden Eigenschaften, bei Belastung und die nachträgliche Bearbeitbarkeit eines so hergestellten Gleitelementes variieren, wobei die Dicke der Gleitschicht, die nach dem erfindungsgemäßen Verfahren ebenfalls besonders einfach eingestellt werden kann, die Anpassungsmöglichkeiten des so erstellten Gleitelementes an die jeweiligen Anforderungen weiter potenziert.

Vorstehend wurde wiederholt bei dem erfindungsgemäßen Verfahren ein metallischer Trägerwerkstoff erwähnt, der bei dem erfindungsgemäßen Verfahren mit der Paste in einer Schichtdicke der Gleitschicht von größer als 50 µm und vorzugsweise mit einer Gleitschichtdicke zwischen 51 µm und 500 µm und insbesondere mit einer Gleitschichtdicke zwischen 100 µm und 300 µm beschichtet wird. Hierfür wird bei dem erfindungsgemäßen Verfahren ein aufgerauhtes oder poröses Band aus Stahl, Bronze, Messing, Aluminium und/oder einer Aluminiumlegierung, ein Verbundwerkstoff aus Stahl und einer porösen Schicht aus Bronze, Messing, Aluminium und/oder einer Aluminiumlegierung oder insbesondere auch ein Gewebe aus Stahl, Bronze, Messing, Aluminium oder einer Aluminiumlegierung mit der zuvor beschriebenen Paste, vorzugsweise einseitig, beschichtet, wobei vorzugsweise diese metallischen Trägerwerkstoffe eine poröse oder aufgerauhte Oberfläche aufweisen, in die die Paste während des Beschichtens vorzugsweise eindringt.

Dieses Eindringen der Paste in die poröse oder aufgerauhte Oberfläche des Trägerwerkstoffes trägt ganz entscheidend mit dazu bei, daß die nach dem erfindungsgemäßen Verfahren auf dem Trägerwerkstoff hergestellten Gleitschichten, deren Dicke relativ zu den bekannten Gleitschichten wesentlich größer ist, einwandfrei auf dem Trägerwerkstoff haften, so daß das eingangs beschriebene Ablösen der Gleitschicht vom Trägerwerkstoff, wie es besonders bei dem bekannten Folien-Beschichtungsverfahren auftreten kann, bei dem nach dem erfindungsgemäßen Verfahren erstellten Gleitelementen nicht beobachtet werden konnte.

Um die für das erfindungsgemäße Verfahren erforderliche Paste, mit der der metallische Trägerwerkstoff beschichtet wird, herzustellen, sieht das erfindungsgemäße Verfahren vor, daß die Paste durch Koagulieren einer wäßrigen, tensidhaltigen Dispersion eines Fluorpolymeren und eines Hochtemperaturpolymeren und ggf. der verschleißmindernden Zusätze hergestellt wird. Insbesondere wird hierbei die Koagulation dieser Dispersion durch Zusatz eines geeigneten Salzes unter Rühren erstellt, wobei nach dem Koagulieren ggf. überschüssiges Wasser bzw. Tensidlösung so weit entfernt wird, bis die erwünschte Viskosität der so erstellten Paste erreicht ist.

Um das zuvor beschriebene Eindringen der Paste in die poröse Oberfläche des metallischen Trägerwerkstoffes während des Beschichtungsvorganges zu erleichtern, wird bei einer Weiterbildung des erfindungsgemäßen Verfahren eine solche Paste erstellt, der zusätzlich ein oder mehrere Tenside zugegeben wurden und/oder die zwischen 30 Gew. % und 70 Gew. %, vorzugsweise zwischen 40 Gew. % und 60 Gew. %, Wasser, jeweils bezogen auf das Gewicht der aufzutragenden Paste, enthält. Durch Variation der Wasserkonzentration im vorstehend genannten Rahmen läßt sich die Viskosität der Paste auf die jeweilige Struktur des metallischen Trägerwerkstoffes anpassen, so daß sichergestellt ist, daß bei dem erfindungsgemäßen Verfahren auch die Paste in die poröse oder aufgerauhte Oberfläche des metallischen Trägerwerkstoffes eindringt und dort während der anschließenden thermischen Behandlung einwandfrei verankert wird, so daß die Haftfestigkeit einer so hergestellten Gleitschicht auf dem metallischen Trägerwerkstoff auch einwandfrei sichergestellt ist. Grundsätzlich zu der zuvor genannten Wasserkonzentration in der Paste ist festzuhalten, daß mit zunehmender Schichtdicke die Wasserkonzentration vorzugsweise verringert wird, so daß insbesondere zur Erstellung von Gleitschichten mit einer Dicke zwischen 51 *µ*m und 100 *µ*m die diesbezügliche Paste insbesondere Wasserkonzentrationen im Bereich um 70 Gew. % und bei den größten erzielbaren Schichtdicken die diesbezügliche Paste Wasserkonzentrationen kleiner als 40 Gew. % aufweist. Die zur Erzielung einer bestimmten Schichtdicke notwendigen Wassergehalte variieren jedoch abhängig von der Art und Menge der eingesetzten Füllstoffe.

Die Menge des oder der Tenside wird derart gewählt, daß um so mehr zugsetzt wird, je dünner die angestrebte Schichtdicke ist. Vorzugsweise wird die insgesamt benötigte Tensidmenge in einer oder mehreren Portionen nach und/oder vor der Koagulation zugegeben.

Die Vorgehensweise wird derart gewählt, daß berücksichtigt ist, daß die Zugabe größerer Tensidmengen vor der Zugabe des Fällungsmittels die Koagulation beeinträchtigen kann und daß die Zugabe zu geringer Tensidmengen vor der Zugabe des Fällungsmittels zu irreversibler Verfestigung der Paste und damit größeren Schichtdicken als beabsichtigt führen kann.

Die Paste kann ein oder mehrere nichtionische Tenside enthalten. Als Tenside kann die Paste einen Alkylpolyglycolester enthalten.

Grundsätzlich kann bei dem erfindungsgemäßen Verfahren jedes Auftragsverfahren angewendet werden, um den metallischen Trägerwerkstoff gleichmäßig mit der Paste in der vorgegebenen Dicke von mindestens 50 *µ*m zu beschichten. Besonders geeignet ist es jedoch, wenn bei dem erfindungsgemäßen Verfahren die Paste auf den Trägerwerkstoff aufgewalzt wird, so daß hierdurch einerseits eine Vergleichmäßigung der Schichtdicke erreicht wird und andererseits sichergestellt wird, daß die Paste auch einwandfrei und gleichmäßig in die poröse Oberfläche des Trägerwerkstoffes eindringt.

Der in der vorliegenden Beschreibung verwendete Begriff poröse Oberfläche des Trägerwerkstoffes deckt bei gewebeartigen metallischen Trägerwerkstoffen auch die Zwischenräume ab, die zwischen den einzelnen Fadensystemen des Gewebes bestehen, wobei vorzugsweise ein derartiger gewebeartiger metallischer Trägerwerkstoff nach einem solchen Verfahren mit der zuvor beschriebenen Paste beschichtet wird, wie diese in der am selben Tag eingereichten deutschen Patentanmeldung (Anwaltsaktenzeichen: F 1768) und/oder der am selben Tag eingereichten deutschen Patentanmeldung (Anwaltsaktenzeichen: F 1769) beschrieben sind.

Wie bereits eingangs im Zusammenhang mit dem erfindungsgemäßen Verfahren ausgeführt ist, erfolgt nach der Beschichtung des metallischen Trägerwerkstoffes mit der zuvor beschriebenen Paste, die das mindestens eine Polytetrafluorethylen (PTFE), alleine oder mit Zusatz von anderen Fluorpolymeren und das mindestens eine Hochtemperaturpolymere in den vorstehend genannten quantitativen Mengen enthält, eine thermische Behandlung, wobei diese thermische Behandlung des mit der Paste beschichteten Trägerwerkstoffes bei einer Temperatur vorzugsweise zwischen 360 °C und 420 °C während einer Verweilzeit vorzugsweise zwischen 2 Minuten und 3 Minuten durchgeführt wird. Hierbei stellt diese thermische Behandlung sicher, daß die aufgetragene Polymermatrix, die im fertigen Gleitelement die Gleitschicht ausbildet und gesintert wird und ihre höchstmögliche Festigkeit erhält.

Um insbesondere bei besonders großen Dicken der Gleitschicht, d.h. bei hohen Mengen an aufgetragener Paste, zu verhindern, daß während der thermischen Behandlung die sich dabei ausbildende Gleitschicht in unerwünschter Weise rissig oder porig wird und somit bereits eine gewisse Vorschädigung erfährt, sieht eine vorteilhafte Weiterbildung des erfindungsgemäßen Verfahrens vor, daß hierbei der mit der Paste beschichtete Trägerwerkstoff unter relativ schonenden Bedingungen, so insbesondere bei Temperaturen um 100 ° bis 160 °C, getrocknet wird.

Um desweiteren die mechanischen Eigenschaften, insbesondere die Verschleißfestigkeit und die selbsttragenden Eigenschaften der nach dem erfindungsgemäßen Verfahren erstellten dicken Gleitschichten sicherzustellen, wird bei einer vorteilhaften Weiterbildung des erfindungsgemäßen Verfahrens die thermisch behandelte und somit gesinterte Gleitschicht einer Verdichtung und insbesondere einer Heißverdichtung, vorzugsweise durch Walzen unterzogen. Beim Verdichten sind die Walzkräfte so zu wählen, daß die Dicke der Kunststoffschicht oberhalb der porösen oder aufgerauhten Grundstruktur um nicht mehr als 10 % verringert wird, da sonst der Verbund mit der Grundstruktur geschädigt werden kann. Mit anderen Worten wird bei dieser Ausführungsform des erfindungsgemäßen Verfahrens somit unmittelbar an die thermische Behandlung der mit der gesinterten Gleitschicht versehene Trägerwerkstoff durch einen von einem Walzenpaar ausgebildeten Walzenspalt geführt, wobei die Temperatur während der bevorzugten Heißverdichtung knapp oberhalb der Schmelztemperatur des Polytetrafluorethylens (PTFE) und somit knapp oberhalb von 327 °C liegt.

Wie bereits vorstehend ausgeführt ist, wird das nach dem erfindungsgemäßen Verfahren hergestellte Material für Gleitelemente, dessen Gleitschichtdicke größer als 50 µm und vorzugsweise zwischen 51 µm und 500 µm und insbesondere zwischen 100 µm und 300 µm variiert, in Gleitlagern, Buchsen, Stoßdämpfern oder Pumpen verwendet, wobei derartige Gleitelemente sowohl ölgeschmiert als auch im schmierungsfreien Zustand eingesetzt werden können.

Das erfindungsgemäße Verfahren wird nachfolgend anhand von Ausführungsbeispielen näher erläutert.

### Allgemeine Herstellungsvorschrift für Gleitelemente

Zunächst wurden die nachfolgend bei den einzelnen Ausführungsbeispielen angegebenen Volumenanteile der Zusätze zusammen mit dem Hochtemperaturpolymeren in Wasser mit Hilfe eines nicht-ionischen Netzmittels homogen aufgeschlämmt. Hiernach erfolgte die Zugabe einer 30 %igen Polytetrafluorethylen-Dispersion und das weitere homogene Vermischen. Nach erfolgter Homogenisierung wurde die Koagulation der so hergestellten Dispersion mit Hilfe einer Aluminiumnitrat-Lösung herbeigeführt.

Nachdem aus diesem Koagulat das überschüssige Wasser entfernt wurde, bis die erwünschte beschichtungsgerechte Konsistenz der so hergestellten Gleitschichtmasse eingestellt war, wurde die so erstellte Paste auf einen Trägerwerkstoff, der ein poröses Bronzegerüst ist, das auf einem Stahlband angeordnet war, in einer solchen Menge aufgewalzt, daß unterschiedliche Gleitschichten resultierten. Hiernach erfolgte eine Vortrocknung, so daß dann der beschichtete Trägerwerkstoff einer thermischen Behandlung zwischen 380 °C und 400 °C während 120 Sekunden zur Sinterung der jeweiligen Polymermatrix unterworfen wurde. Unmittelbar im Anschluß an den Sinterprozeß erfolgte dann ein Heißverdichten der Gesamtstruktur durch Verwalzen.

Die so hergestellten Gleitelemente wurden einer Verschleißuntersuchung mittels einer Stift-Walzenprüfanordnung unterworfen. Dabei wurde ein runder Prüfkörper von 10 mm Durchmesser mit einer definierten Kraft auf eine rotierende Walze von 100 mm Durchmesser gedruckt. Der Prüfkörper war so vorgeformt, daß er an der Oberfläche der Walze anlag. Die spezifische Belastung betrug 17,5 MPa, wobei die Walze mit einer Geschwindigkeit von 0,52 m/s transportiert wurde. Die Walzenrauhheit Rz betrug etwa 0,8 *µ*m.

Gemessen wurden die Dickenabnahme (Verschleißrate) in *µ*m pro 1 Stunde Meßzeit, wobei die Ergebnisse in der Tabelle 1 zusammengefaßt sind.

### Ausführungsbeispiel 1

Es wurde eine Paste für eine Schicht, die 60 Vol. % Polytetrafluorethylen (PTFE) und 40 Vol. % eines vollaromatischen Polyimids (P84) enthielt, erstellt.

Zur Herstellung dieser Paste wurden 40 g des Polyimid-Pulvers in 200 g Wasser unter Zusatz von 0,15 g Alkylpolyglykolether und 0,4 g Natriumlaurylsulfat 180 Sekunden mittels eines Ultraturrax-Gerätes dispergiert. Dann wurden 300 g einer 30 Gew. %igen Polytetrafluorethylen-Dispersion zugegeben, 45 Sekunden lang mit einer Dissolverscheibe weitergerührt, worauf die Gemisch mit 5 ml 1-molarer Aluminiumnitrat-Lösung versetzt wurde, um die Koagulation auszulösen. Nach einer weiteren Rührzeit von 60 Sekunden wurde durch Abgießen der allmählich freigesetzten Flüssigkeit der Wassergehalt der entstandenen Paste auf 53 Gew. % eingestellt.

Diese Paste wurde dann auf den zuvor beschriebenen Trägerwerkstoff aufgetragen, gesintert und nachgewalzt, wobei die resultierende Schichtdicke der Gleitschicht 250 µm betrug.

### Ausführungsbeispiel 2

Die zuvor beim Ausführungsbeispiel 1 genannten Inhaltsstoffe wurden verwendet, um eine zweite Paste zu erstellen, wobei zunächst 26,6 g eines Polyimid-Pulvers, 140 g Wasser, 0,25 g Alkylpolyglykolether und 0,2 g Natriumlaurylsulfat 120 Sekunden mittels eines Ultraturrax-Gerätes vordispergiert wurden. Dann wurden 200 g einer 30 Gew. % igen Polytetrafluorethylen-Dispersion zugegeben, 45 Sekunden langsam mit einer Dissolverscheibe weitergerührt, worauf die Koagulation des Gemisches mit 5 ml 1-molarer Aluminiumnitrat-Lösung ausgelöst wurde. Nach einer weiteren Rührzeit von 60 Sekunden wurde durch Abgießen der allmählich freigesetzten Flüssigkeit der Wassergehalt der entstandenen Paste auf 59 Gew. % eingestellt. Mit dieser Paste wurden beim Auftragen auf den zuvor beschriebenen Trägerwerkstoff eine Gleitschichtdicke von 130 *µ*m erzeugt.

### Ausführungsbeispiel 3

Es wurde eine Paste für eine Schicht, die 55 Vol. % Polytetrafluorethylen (PTFE), 30 Vol. % Polyphenylsulfon (PPSO₂) und 15 Vol. % Graphit enthielt, erstellt.

Zur Herstellung dieser Paste wurden 21,8 g des PPSO₂ Pulvers und 17,1 g Graphit in 140 g Wasser unter Zusatz von 0,2 g Alkylpolyglykolether (APGE) und 0,2 g Natriumlaurylsulfat 180 Sekunden mittels eines Ultraturrax-Gerätes dispergiert. Dann wurden 200 g einer 30 Gew. %igen Polytetrafluorethylen-Dispersion zugegeben, 60 Sekunden langsam mit einer Dissolverscheibe weitergerührt, worauf das Gemisch mit 5 ml 1-molarer Aluminiumnitrat-Lösung versetzt wurde, um die Koagulation auszulösen. Nach einer weiteren Rührzeit von 60 Sekunden wurde durch Abgießen der allmählich freigesetzten Flüssigkeit der Wassergehalt der entstandenen Paste auf 49 Gew. % eingestellt und nochmals 0,18 g APGE eingemischt.

Diese Paste wurde dann auf den zuvor beschriebenen Trägerwerkstoff aufgetragen, gesintert und nachgewalzt, wobei die resultierende Schichtdicke der Gleitschicht 350 *µ*m betrug.

### Ausführungsbeispiel 4

Es wurde eine Paste für eine Schicht, die 60 Vol. % Polytetrafluorethylen (PTFE), 25 Vol. % Polyaramidpulver (PPTA), 10 Vol. % MoS₂ und 5 Vol. % C-Fasern enthielt, erstellt.

Zur Herstellung dieser Paste wurden 16,7 g des PPTA-Pulvers und 22,9 g des MoS₂ und 4,8 g Kohlenstoff-Kurzfasern in 140 g Wasser unter Zusatz von 0,15 g Alkylpolyglykolether (APGE) und 0,2 g Natriumlaurylsulfat 180 Sekunden mittels eines Ultraturrax-Gerätes dispergiert. Dann wurden 200 g einer 30 Gew. %-gen Polytetrafluorethylen-Dispersion zugegeben, 60 Sekunden langsam mit einer Dissolverscheibe weitergerührt, worauf das Gemisch mit 5 ml 1-molarer Aluminiumnitrat-Lösung versetzt wurde, um die Koagulation auszulösen. Nach einer weiteren Rührzeit von 60 Sekunden wurde durch Abgießen der allmählich freigesetzten Flüssigkeit der Wassergehalt der entstandenen Paste auf 42 Gew. % eingestellt und weitere 0,45 g APGE zugesetzt.

Diese Paste wurde dann auf den zuvor beschriebenen Trägerwerkstoff aufgetragen, gesintert und nachgewalzt, wobei die resultierende Schichtdicke der Gleitschicht 360 µm betrug.

### Ausführungsbeispiel 5

Es wurde eine Paste für eine Schicht, die 60 Vol. % Polytetrafluorethylen (PTFE), 25 Vol. % Polyaramidpulver (PPTA), 10 Vol. % MoS₂ und 5 Vol. % C-Fasem enthielt, erstellt.

Zur Herstellung dieser Paste wurden 16,7 g des PPTA-Pulvers und 22,9 g des MoS₂ und 4,8 g Kohlenstoff-Kurzfasern in 140 g Wasser unter Zusatz von 0,15 g Alkylpolyglykolether (APGE) und 0,2 g Natriumlaurylsulfat 180 Sekunden mittels eines Ultraturrax-Gerätes dispergiert. Dann wurden 200 g einer 30 Gew. % igen Polytetrafluorethylen-Dispersion zugegeben, 60 Sekunden langsam mit einer Dissolverscheibe weitergerührt, worauf das Gemisch mit 5 ml 1-molarer Aluminiumnitrat-Lösung versetzt wurde, um die Koagulation auszulösen. Nach einer weiteren Rührzeit von 60 Sekunden wurde durch Abgießen der allmählich freigesetzten Flüssigkeit der Wassergehalt der entstandenen Paste auf 48 Gew. % eingestellt und weitere 0,6 g APGE zugesetzt.

Diese Paste wurde dann auf den zuvor beschriebenen Trägerwerkstoff aufgetragen, gesintert und nachgewalzt, wobei die resultierende Schichtdicke der Gleitschicht 140 µm betrug.

### Ausführungsbeispiel 6

Es wurde eine Paste für eine Schicht, die 60 Vol. % Polytetrafluorethylen (PTFE), 35 Vol. % Polyetheretherketon (PEEK) und 5 Vol. % Bornitrid enthielt, erstellt.

Zur Herstellung dieser Paste wurden 21,7 g des PEEK-Pulvers und 5,5 g des BN in 140 g Wasser unter Zusatz von 0,15 g Alkylpolyglykolether (APGE) und 0,2 g Natriumlaurylsulfat 180 Sekunden mittels eines Ultraturrax-Gerätes dispergiert. Dann wurden 200 g einer 30 Gew. %igen Polytetrafluorethylen-Dispersion zugegeben, 60 Sekunden langsam mit einer Dissolverscheibe weitergerührt, worauf das Gemisch mit 5 ml 1-molarer Aluminiumnitrat-Lösung versetzt wurde, um die Koagulation auszulösen. Nach einer weiteren Rührzeit von 60 Sekunden wurde durch Abgießen der allmählich freigesetzten Flüssigkeit der Wassergehalt der entstandenen Paste auf 57 Gew. % eingestellt und weitere 0,25 g APGE zugesetzt.

Diese Paste wurde dann auf den zuvor beschriebenen Trägerwerkstoff aufgetragen, gesintert und nachgewalzt, wobei die resultierende Schichtdicke der Gleitschicht 400 µm betrug.

### Ausführungsbeispiel 7

Es wurde eine Paste für eine Schicht, die 70 Vol. % Polytetrafluorethylen (PTFE), 25 Vol. % Polyaramidpulver (PPTA) und 5 Vol. % Bornitrid enthielt, erstellt.

Zur Herstellung dieser Paste wurden 14,3 g des PPTA-Pulvers und 4,7 g des BN in 140 g Wasser unter Zusatz von 0,15 g Alkylpolyglykolether (APGE) und 0,2 g Natriumlaurylsulfat 180 Sekunden mittels eines Ultraturrax-Gerätes dispergiert. Dann wurden 200 g einer 30 Gew. %igen Polytetrafluorethylen-Dispersion zugegeben, 60 Sekunden langsam mit einer Dissolverscheibe weitergerührt, worauf das Gemisch mit 5 ml 1-molarer Aluminiumnitrat-Lösung versetzt wurde, um die Koagulation auszulösen. Nach einer weiteren Rührzeit von 60 Sekunden wurde durch Abgießen der allmählich freigesetzten Flüssigkeit der Wassergehalt der entstandenen Paste auf 55 Gew. % eingestellt.

Diese Paste wurde dann auf den zuvor beschriebenen Trägerwerkstoff aufgetragen, gesintert und nachgewalzt, wobei die resultierende Schichtdicke der Gleitschicht 370 µm betrug.

### Ausführungsbeispiel 8

Es wurde eine Paste für eine Schicht, die 70 Vol. % Polytetrafluorethylen (PTFE), 25 Vol. % Polyaramid (PPTA) und 5 Vol. % Bornitrid enthielt, erstellt.

Zur Herstellung dieser Paste wurden 14,3 g des PPTA-Pulvers und 4,7 g des BN in 140 g Wasser unter Zusatz von 0,15 g Alkylpolyglykolether (APGE) und 0,2 g Natriumlaurylsulfat 180 Sekunden mittels eines Ultraturrax-Gerätes dispergiert. Dann wurden 200 g einer 30 Gew. %igen Polytetrafluorethylen-Dispersion zugegeben, 60 Sekunden langsam mit einer Dissolverscheibe weitergerührt, worauf das Gemisch mit 5 ml 1-molarer Aluminiumnitrat-Lösung versetzt wurde, um die Koagulation auszulösen. Nach einer weiteren Rührzeit von 60 Sekunden wurde durch Abgießen der allmählich freigesetzten Flüssigkeit der Wassergehalt der entstandenen Paste auf 57 Gew. % eingestellt und weitere 0,25 APGE zugesetzt.

Diese Paste wurde dann auf den zuvor beschriebenen Trägerwerkstoff aufgetragen, gesintert und nachgewalzt, wobei die resultierende Schichtdicke der Gleitschicht 150 µm betrug.

Von den nach den Ausführungsbeispielen 1 bis 8 hergestellten Gleitschichten wurden die Verschleißraten bestimmt, wie dies vorstehend beschrieben ist. Hierbei ergibt sich folgendes Ergebnis:

**Tabelle 1 Verschleißraten von unterschiedlich hergestellten Gleitelementen**

| **Hergestellt nach Ausführungsbeispiel** | **Schichtdicke *µ*m** | **Verschleißrate *µ*m/h** |
|---|---|---|
| 1 | 250 | 70 |
| 2 | 130 | 65 |
| 3 | 350 | 20 |
| 4 | 360 | 65 |
| 5 | 140 | 25 |
| 6 | 400 | 35 |
| 7 | 370 | 140 |
| 8 | 150 | 70 |

Zusammensetzung Nr. 7 ist für die hohe Schichtdicke von 370 *µ*m weniger gut geeignet. Sie sollte daher nicht für die größten Schichtdicken verwendet werden.

Desweiteren wurden unter Verwendung von unterschiedlichen Gemischen auf dem zuvor beschriebenen Trägerwerkstoff nach dem im Ausführungsbeispiel 1 angegebenen Verfahren 300 *µ*m dicke Gleitschichten erzeugt, die ebenfalls bezüglich ihres Verschleißverhaltens untersucht wurde. Die Ergebnisse dieser Untersuchungen sind in der nachfolgenden Tabelle 2 wiedergegeben.

**Tabelle 2 Verschleißraten von 300 µm dicken Gleitschichten, die jedoch unterschiedliche Schichtzusammensetzungen aufweisen (Angaben jeweils in Vol. %)**

| | **Zusammensetzung** | **Verschleißrate in *µ*m/h** |
|---|---|---|
| 1 | PTFE 60 PI 40 | 60 |
| 2 | PTFE 60 PI 35 BN 5 | 40 |
| 3 | PTFE 60 PPSO₂ 40 | 60 |
| 4 | PTFE 65 PPSO₂ 35 | 25 |
| 5 | PTFE 60 PPTA 40 | 19 |
| 6 | PTFE 60 PEEK 40 | 16 |
| 7 | PTFE 60 PEEK 35 BN 5 | 37 |
| 8 | PTFE 75 PPTA 25 | 26 |
| 9 | PTFE 70 PPTA BN 5 | 62 |
| 10 | PTFE 65 PPSO₂ 30 BN 5 | 15 |
| 11 | PTFE 55 PPSO₂ 30 Graphit 15 | 18 |
| 12 | PTFE 60 PPTA 2,5 MoS₂ 10 Kohlefaser 5 | 30 |
| 13 | PTFE 60 PAI 40 | 170 |
| 14 | PTFE 60 PES 40 | 200 |
| 15 | PTFE 60 PPS 40 | 360 |
| 16 | PTFE 80 Pb 20 (max. 150 *µ*m) | 120 |
| 17 | PTFE/Graphit 30 Folie geklebt (Stand der Technik) | 230 |
| 18 | Handelsübliches PTFE/Bronze-Gewebematerial (ca. 60 *µ*m) (Stand der Technik) | 80 |

Die Beispiele Nr. 13 bis 15 zeigen, daß Zusammensetzungen, die hinsichtlich der Schmelzpunkte bzw. Glasübergangstemperaturen der eingesetzten Hochtemperaturkunststoffe von der Erfindung abweichen, deutlich schlechtere Verschleißwerte aufweisen. Beispiel Nr. 16 ist eine gebräuchliche Zusammensetzung, die bei größeren Schichtdicken ebenfalls keine brauchbaren Ergebnisse zeigt.

Um die maximale Belastbarkeit eines nach dem hier beanspruchten Verfahren hergestellten Gleitelementes im Vergleich zu einem handelsüblichen Gleitelement zu ermitteln, wurden aus beiden Gleitelementen Prüfbuchsen hergestellt. Der Innendurchmesser dieser Buchsen betrug 22 mm, die Länge 15 mm. Die Buchsen wurden mittels einer 0,125 m/s rotierenden Stahlwellen der Rauhheit Rz 0,8 *µ*m geprüft und dabei belastet. Als maximale Belastbarkeit wurde die höchste Belastung definiert, bei der eine Lebensdauer von 50 Stunden der diesbezüglichen Buchsen erreicht wurde.

Die Ergebnisse dieser Messung sind in der Tabelle 3 wiedergegeben.

**Tabelle 3 maximale Belastbarkeit bei einer Lebensdauer von 50 Stunden**

| | |
|---|---|
| Gleitelement 1 | 30 MPa |
| Gleitelement 2 | 7 MPa |

Das Gleitelement 1 bestand aus einem handelsüblichen Bronzegewebe als Trägerwerkstoff, das einseitig mit einer Paste, die 65 Vol. % Polytetrafluorethylen (PTFE), 30 Vol. % Polyphenylensulfon (PPSO₂) und 5 Vol. % Bornitrid enthielt, beschichtet war, wobei die Schichtdicke dieser Gleitschicht 60 *µ*m betrug.

Das Gleitelement 2 bestand aus einer handelsüblichen, prinzipiell gleichartig aufgebauten Material, bestehend aus dem identischen Bronzegewebe, beschichtet aus einer Folie mit Polytetrafluorethylen (PTFE) mit einer Füllstoffkombination nach dem Stand der Technik. Auch hierbei betrug die Gleitschichtdicke 60 *µ*m.

Diese Ergebnisse belegen den deutlichen Vorteil, der mit nach dem erfindungsgemäßen Verfahren hergestellten Schichten erzielt werden kann.

## Patentansprüche

1. Verfahren zur Herstellung eines mit einer mehr als 50 µm dicken Gleitschicht versehenen aufgerauhten oder porösen metallischen Trägerwerkstoffes, der als Gleitelement, insbesondere in Gleitlagern oder -buchsen oder in Stoβdämpfern oder Pumpen, verwendet wird, insbesondere für solche Anwendungen, bei denen ein Nacharbeiten, insbesondere ein Bohren, Reiben, Fräsen oder Räumen, der Gleitfläche im eingebauten Zustand des Gleitelementes erforderlich wird, bei welchem Verfahren der Trägerwerkstoff mit einer Paste des Gleitschichtmaterials, das neben einem Fluorpolymeren noch mindestens ein Hochtemperaturpolymeres enthält, beschichtet wird und hiernach der so beschichtete Trägerwerkstoff einer thermischen Behandlung unterworfen wird, **dadurch gekennzeichnet, daß** auf den Trägerwerkstoff eine solche Paste aufgetragen wird, die als Fluorpolymeres zwischen 40 Vol. % und 75 Vol. % Polytetrafluorethylen (PTFE) oder Polytetrafluorethylen (PTFE) mit Zusätzen anderer Fluorpolymeren und zwischen 60 Vol. % und 25 Vol. % des mindestens einen Hochtemperaturpolymeren, jeweils bezogen auf die Gesamtzusammensetzung der fertigen Gleitschicht, aufweist, wobei solche Hochtemperaturpolymeren eingesetzt werden, deren Schmelzpunkt nicht unterhalb 327 °C liegt, wenn sie überwiegend kristallin sind, oder deren Glasübergangstemperatur nicht unterhalb 327°C liegt, wenn sie überwiegend amorph sind.

2. Verfahren nach Anspruch 1, **dadurch gekennzeichnet, daß** der Trägerwerkstoff derart beschichtet wird, daß das Verbundmaterial eine Gleitschicht mit einer Dicke zwischen 51 µm und 500 µm, vorzugsweise zwischen 100 µm und 300 µm, aufweist.

3. Verfahren nach einem der vorangehenden Ansprüche, **dadurch gekennzeichnet, daß** auf den Trägerwerkstoff eine solche Paste aufgetragen wird, die zwischen 55 Vol. % und 70 Vol. % Polytetrafluorethylen (PTFE) oder Polytetrafluorethylen (PTFE) mit Zusätzen anderer Fluorpolymeren und zwischen 45 Vol. % und 30 Vol. % des mindestens einen Hochtemperaturpolymeren, bezogen auf die Gesamtzusammensetzung der fertigen Gleitschicht, aufweist.

4. Verfahren nach einem der vorangehenden Ansprüche, **dadurch gekennzeichnet, daß** als Zusatz zum Polytetrafluorethylen (PTFE) aus der Gruppe, umfassend Poly(tetrafluorethylen-co-perfluorvinylmethylether (PFA), Poly(tetrafluorethylen-co-hexafluorpropylen (FEP), Poly(hexafluorisobutylen-covinylidenfluorid)(CM-1), Poly(ethylen-alt-tetrafluorethylen (ETFE) und/oder Polyvinylidenfluorid (PVDF), ausgewählt wird.

5. Verfahren nach einem der vorangehenden Ansprüche, **dadurch gekennzeichnet, daß** der Anteil des Polytetrafluorethylen ≥ 40 Vol. % ist.

6. Verfahren nach einem der vorangehenden Ansprüche, **dadurch gekennzeichnet, daß** eine solche Paste verwendet wird, die als Hochtemperaturpolymeres Polyphenylensulfon (PPSO₂), Polyetheretherketon, vollaromatische Polyimide, vollaromatische Polyester und/oder vollaromatische Polyamide, vorzugsweise Poly-(p-phenylenterephthalamid)(PPTA), Polyaramid und/oder Poly-(p-benzamid)(PBA), aufweist.

7. Verfahren nach einem der vorangehenden Ansprüche, **dadurch gekennzeichnet, daß** die Korngröße der eingesetzten Kunststoffpulver zwischen 1 *µ*m und der angestrebten Schichtdicke liegt.

8. Verfahren nach einem der vorangehenden Ansprüche, **dadurch gekennzeichnet, daß** die Korngröße der eingesetzten Kunststoffpulver zwischen 10 % und 50 % der angestrebten Schichtdicke liegt.

9. Verfahren nach einem der vorangehenden Ansprüche, **dadurch gekennzeichnet, daß** der Trägerwerkstoffe mit einer solchen Paste beschichtet wird, die bis zu 35 Vol. % an verschleißmindernden Zusätzen, bezogen auf die Gesamtzusammensetzung der fertigen Gleitschicht, enthält, wobei die Konzentration an Fluorpolymeren 40 Vol. %, bezogen auf die Gesamtzusammensetzung der fertigen Gleitschicht, nicht unterschreiten soll.

10. Verfahren nach einem der vorangehenden Ansprüche, **dadurch gekennzeichnet, daß** eine solche Paste auf den Trägerwerkstoff aufgetragen wird, die als Füllstoffe Metallsulfide, vorzugsweise Molybdänsulfid und/oder Wolframsulfid, Metallfluoride, Blei, Bleioxid, Bornitrid, vorzugsweise hexagonales Bornitrid, Kohlenstoffmodifikationen, vorzugsweise Graphit, Fasern, vorzugsweise Kohlefasern, Hartstoffe, Farbstoffe, Eisen-III-Oxid und/oder Bariumsulfat enthält.

11. Verfahren nach einem der vorangehenden Ansprüche, **dadurch gekennzeichnet, daß** als metallischer Trägerwerkstoff ein aufgerauhtes oder poröses Band aus Stahl, Bronze, Messing, Aluminium und/oder einer Aluminiumlegierung, ein Verbundwerkstoff aus Stahl und einer porösen oder aufgerauhten Schicht aus Bronze, Messing, Aluminium oder eine Aluminiumlegierung oder ein Gewebe aus Stahl, Bronze, Messing, Aluminium oder einer Aluminiumlegierung mit der Paste beschichtet wird.

12. Verfahren nach einem der vorangehenden Ansprüche, **dadurch gekennzeichnet, daß** die Paste durch Koagulieren eines Gemisches aus einer wäßrigen tensidhaltigen Polytetrafluorethylen-Dispersion, eines Pulvers des Hochtemperaturpolymeren und ggf. eines Pulvers der Füllstoffe hergestellt wird.

13. Verfahren nach einem der vorangehenden Ansprüche, **dadurch gekennzeichnet, daß** der metallische Trägerwerkstoff mit einer Paste beschichtet wird, der zusätzlich ein oder mehrere Tenside zugegeben wurde und/oder die zwischen 30 und 70 Gew.-%, vorzugsweise zwischen 40 und 60 Gew.-% Wasser, jeweils bezogen auf das Gewicht der aufzutragenden Paste, enthält.

14. Verfahren nach Anspruch 13, **dadurch gekennzeichnet, daß** die Menge des oder der Tenside so gewählt wird, daß mit zunehmender Menge eine abnehmende Schichtdicke einhergeht.

15. Verfahren nach einem der Ansprüche 13 oder 14, **dadurch gekennzeichnet, daß** die insgesamt benötigte Tensidmenge in einer oder mehreren Portionen nach und/oder vor der Koagulation zugegeben wird.

16. Verfahren nach einem der vorangehenden Ansprüche, **dadurch gekennzeichnet, daß** die Paste ein oder mehrere nichtionische Tenside enthält.

17. Verfahren nach einem der vorangehenden Ansprüche, **dadurch gekennzeichnet, daß** die Paste als Tensid einen Alkylpolyglycolester enthält.

18. Verfahrenn nach einem der vorangehenden Ansprüche, **dadurch gekennzeichnet, daß** zum Beschichten die Paste auf den Trägerwerkstoff aufgewalzt wird.

19. Verfahren nach einem der vorangehenden Ansprüche, **dadurch gekennzeichnet, daß** die thermische Behandlung des mit der Paste beschichteten Trägerwerkstoffes bei einer Temperatur zwischen 360°C und 420°C und während einer Behandlungszeit zwischen 120 Sekunden bis 180 Sekunden durchgeführt wird.

20. Verfahren nach einem der vorangehenden Ansprüche, **dadurch gekennzeichnet, daß** unmittelbar an die thermische Behandlung ein Verdichten, insbesondere ein Heißverdichten, mittels eines Walzenpaares derart durchgeführt wird, daß die Dickenabnahme der Gleitschicht nicht mehr als 10 %, bezogen auf die Dicke der Gleitschicht vor dem Verdichten, beträgt.

## Claims

1. Method for manufacturing a roughened or porous metallic base material provided with a sliding layer more than 50 µm thick, which is used as a sliding element, particularly in slide bearings or slide bushings or in shock absorbers or pumps, in particular for applications whereby further treatment, and particularly boring, reaming, milling or broaching, of the sliding surface in the installed condition of the sliding element is required, in which method the base material is coated with a paste of the sliding layer material which contains, in addition to a fluoropolymer, at least one high temperature polymer, and then the backing material thus coated is subjected to heat treatment, **characterised in that** a paste is applied to the base material which comprises as fluoropolymer in the range of 40 vol.% to 75 vol.% of polytetrafluoroethylene (PTFE) or polytetrafluoroethylene (PTFE) with additions of other fluoropolymers and in the range of 60 vol.% to 25 vol.% of the at least one high temperature polymer, in each case relative to the total composition of the finished sliding layer, wherein high temperature polymers are used which have a melting point that is not less than 327°C if they are predominantly crystalline, or a glass transition temperature of not less than 327°C if they are predominantly amorphous.

2. Method according to claim 1, **characterised in that** the base material is coated in such a way that the composite material has a sliding layer thickness in the range of 51 µm to 500 µm, and preferably in the range of 100 µm to 300 µm.

3. Method according to one of the preceding claims, **characterised in that** a paste is applied to the base material which comprises in the range of 55 vol.% to 70 vol.% of polytetrafluoroethylene (PTFE) or polytetrafluoroethylene (PTFE) with additions of other fluoropolymers and in the range of 45 vol.% to 30 vol.% of the at least one high temperature polymer, in each case relative to the total composition of the finished sliding layer.

4. Method according to one of the preceding claims, **characterised in that** the addition to the polytetrafluoroethylene (PTFE) is selected from the group comprisingpoly(tetrafluoroethylene-co-perfluorovinyl methyl ether (PFA), poly(tetrafluoroethylene-co-hexafluoropropylene (FEP), poly(hexafluoroisobutylenecovinylidene fluoride) (CM-1), poly(ethylene-alttetrafluoroethylene) (ETFE) and/or polyvinylidene fluoride (PVDF).

5. Method according to one of the preceding claims, **characterised in that** the proportion of the polytetrafluoroethylene is ≥ 40 vol.%.

6. Method according to one of the preceding claims, **characterised in that** a paste is used which comprises as high temperature polymer polyphenylene sulphone (PPSO₂), polyetherether ketone, fully aromatic polyimides, fully aromatic polyesters and/or fully aromatic polyamides, preferably poly(p-phenylene terephthalamide) (PPTA), polyaramid and/or poly(p-benzamide) (PBA).

7. Method according to one of the preceding claims, **characterised in that** the grain size of the plastics powder used is between 1 µm and the desired layer thickness.

8. Method according to one of the preceding claims, **characterised in that** the grain size of the plastics powder used is in the range of 10% to 50% of the desired layer thickness.

9. Method according to one of the preceding claims, **characterised in that** the base material is coated with a paste which contains up to 35 vol.% of wear-reducing additions, relative to the total composition of the finished coating, wherein the concentration of fluoropolymers should not fall below 40 vol.% relative to the total composition of the finished sliding layer.

10. Method according to one of the preceding claims, **characterised in that** a paste is applied to the base material which contains as fillers metal sulphides, preferably molybdenum sulphide and/or tungsten sulphide, metal fluorides, lead, lead oxide, boron nitride, preferably hexagonal boron nitride, carbon modifications, preferably graphite, fibres, preferably carbon fibres, hard materials, colorants, iron (III) oxide and/or barium sulphate.

11. Method according to one of the preceding claims, **characterised in that**, as the metallic base material, a roughened or porous strip of steel, bronze, brass, aluminium and/or an aluminium alloy, a composite material of steel and a porous or roughened layer of bronze, brass, aluminium or an aluminium alloy or a fabric of steel, bronze, brass, aluminium or an aluminium alloy is coated with the paste.

12. Method according to one of the preceding claims, **characterised in that** the paste is produced by coagulating a mixture of an aqueous, surfactant-containing polytetrafluoroethylene dispersion, a powder of the high temperature polymer and optionally a powder of the fillers.

13. Method according to one of the preceding claims, **characterised in that** the metallic base material is coated with a paste to which one or more surfactants have additionally been added and/or which contains in the range of 30 wt.% to 70 wt.%, preferably in the range of 40 wt.% to 60 wt.% of water, in each case relative to the weight of the paste to be applied.

14. Method according to claim 13, **characterised in that** the quantity of the surfactant or surfactants is selected in such a way that an increasing quantity is accompanied by a decreasing layer thickness.

15. Method according to one of claims 13 or 14, **characterised in that** the total surfactant quantity required is added in one or more portions after and/or before coagulation.

16. Method according to one of the preceding claims, **characterised in that** the paste contains one or more nonionic surfactants.

17. Method according to one of the preceding claims, **characterised in that** the paste contains an alkyl polyglycol ester as surfactant.

18. Method according to one of the preceding claims, **characterised in that** the paste is rolled onto the base material for coating purposes.

19. Method according to one of the preceding claims, **characterised in that** heat treatment of the base material coated with the paste is performed at a temperature in the range of 360°C to 420°C for a treatment time in the range of 120 seconds to 180 seconds.

20. Method according to one of the preceding claims, **characterised in that**, immediately after heat treatment, compaction, especially hot compaction, is performed by means of a roll pair in such a way that the reduction in thickness of the coating amounts to no more than 10%, relative to the thickness of the coating prior to compaction.

## Revendications

1. Procédé de fabrication d'un matériau de support métallique rugueux ou poreux muni d'une couche de glissement de plus de 50 µm, qui est utilisé en tant qu'élément de glissement, en particulier dans des paliers ou des coussinets lisses ou dans des amortisseurs ou des pompes, en particulier pour des applications dans lesquelles un post-traitement, en particulier un perçage, une abrasion, un fraisage ou un brochage de la surface lisse est nécessaire à l'état monté de l'élément de glissement, procédé dans lequel le matériau de support est revêtu d'une pâte du matériau de la couche de glissement, qui contient en plus d'un polymère fluoré encore au moins un polymère haute température, puis le matériau de support ainsi revêtu est soumis à un traitement thermique, **caractérisé en ce que** l'on applique sur le matériau de support une pâte qui présente en tant que polymère fluoré 40 % en volume à 75 % en volume de polytétrafluoroéthylène (PTFE) ou de polytétrafluoroéthylène (PTFE) avec des additifs d'autres polymères fluorés, et 60 % en volume à 25 % en volume d'au moins un polymère haute température, respectivement par rapport à ou sur la composition totale de la couche de glissement finie, et dans lequel on utilise des polymères haute température dont le point de fusion n'est pas inférieur à 327 °C lorsqu'ils sont essentiellement cristallins ou dont la température de transition vitreuse n'est pas inférieure à 327 °C lorsqu'ils sont essentiellement ou majoritairement amorphes.

2. Procédé selon la revendication 1, **caractérisé en ce que** le matériau de support est revêtu de façon telle que le matériau composite présente une couche de glissement ayant une épaisseur comprise entre 51 µm et 500 µm, de préférence entre 100 µm et 300 µm.

3. Procédé selon l'une des revendications précédentes, **caractérisé en ce que** l'on applique sur le matériau de support une pâte contenant 55 % en volume à 70 % en volume de polytétrafluoroéthylène (PTFE) ou de polytétrafluoroéthylène (PTFE) avec des additifs d'autres polymères fluorés, et 45 % en volume à 30 % en volume d'au moins un polymère haute température, par rapport à ou sur la base de la composition totale de la couche de glissement finie.

4. Procédé selon l'une des revendications précédentes, **caractérisé en ce que** l'on sélectionne comme additif au polytétrafluoroéthylène (PTFE) un composé dans le groupe comprenant le poly(tétrafluoroéthylène-perfluorovinylméthyléther) (PFA), du poly(tétrafluoroéthylène-hexafluoropropylène) (FEP), du poly(hexafluoroisobutylène-fluorure de vinylidène) (CM-1), du poly(éthylène-tétrafluoroéthylène) alterné (ETFE) et/ou du poly(fluorure de vinylidène) (PVDF).

5. Procédé selon l'une des revendications précédentes, **caractérisé en ce que** la fraction du polytétrafluoroéthylène est ≥ 40 % en volume.

6. Procédé selon l'une des revendications précédentes, **caractérisé en ce que** l'on utilise une pâte qui présente en tant que polymère haute température de la polyphénylènesulfone (PPSO₂), de la polyétheréthercétone, des polyimides entièrement aromatiques, des polyesters entièrement aromatiques et/ou des polyamides entièrement aromatiques, de préférence du poly(p-phénylène téréphtalamide) (PPTA), de la polyaramide et/ou du poly(p-benzamide) (PBA).

7. Procédé selon l'une des revendications précédentes, **caractérisé en ce que** la taille de grains de la poudre synthétique utilisée est comprise entre 1 µm et l'épaisseur de couche recherchée.

8. Procédé selon l'une des revendications précédentes, **caractérisé en ce que** la taille de grains de la poudre synthétique utilisée est comprise entre 10 % et 50 % de l'épaisseur de couche recherchée.

9. Procédé selon l'une des revendications précédentes, **caractérisé en ce que** le matériau de support est revêtu d'une pâte qui contient jusqu'à 35 % en volume d'additifs réduisant l'usure, par rapport à ou sur la base de la composition totale de la couche de glissement finie, la concentration en polymères fluorés ne devant pas être inférieure à 40 % en volume, par rapport à ou sur la base de la composition totale de la couche de glissement finie.

10. Procédé selon l'une des revendications précédentes, **caractérisé en ce que** l'on applique sur le matériau de support une pâte qui contient en tant que charges des sulfures métalliques, de préférence du sulfure de molybdène, et/ou du sulfure de tungstène, des fluorures métalliques, du plomb, de l'oxyde de plomb, du nitrure de bore, de préférence du nitrure de bore hexagonal, des modifications de carbone, de préférence du graphite, des fibres, de préférence des fibres de carbone, des substances dures, des colorants, de l'oxyde de fer III et/ou du sulfate de baryum.

11. Procédé selon l'une des revendications précédentes, **caractérisé en ce qu'**en tant que matériau de support métallique, on revêt avec la pâte une bande rugueuse ou poreuse en acier, bronze, laiton, aluminium et/ou alliage d'aluminium, un composite d'acier et d'une couche poreuse ou rugueuse de bronze, laiton, aluminium et/ou alliage d'aluminium ou un tissu d'acier, de bronze, de laiton, d'aluminium ou d'un alliage d'aluminium.

12. Procédé selon l'une des revendications précédentes, **caractérisé en ce que** l'on fabrique la pâte par coagulation d'un mélange composé d'une dispersion aqueuse tensioactive de polytétrafluoroéthylène, d'une poudre du polymère haute température et éventuellement d'une poudre des matériaux de charge.

13. Procédé selon l'une des revendications précédentes, **caractérisé en ce que** l'on revêt le matériau de support métallique d'une pâte à laquelle on a ajouté de plus un ou plusieurs tensioactifs et/ou qui contient 30 à 70 % en masse, de préférence 40 à 60 % en masse, d'eau, respectivement par rapport à ou sur la base de la masse de la pâte à appliquer.

14. Procédé selon la revendication 13, **caractérisé en ce que** la quantité du ou des tensioactifs est sélectionnée de façon telle qu'une augmentation de la quantité s'accompagne d'une réduction de l'épaisseur de la couche.

15. Procédé selon l'une des revendications 13 ou 14, **caractérisé en ce que** la quantité totale nécessaire de tensioactifs est ajoutée après et/ou avant la coagulation en une ou plusieurs portions.

16. Procédé selon l'une des revendications précédentes, **caractérisé en ce que** la pâte contient un ou plusieurs tensioactifs non ioniques.

17. Procédé selon l'une des revendications précédentes, **caractérisé en ce que** la pâte contient en tant que tensioactif un ester d'alkylpolyglycol.

18. Procédé selon l'une des revendications précédentes, **caractérisé en ce que** pour effectuer le revêtement, on applique la pâte au rouleau ou cylindre sur le matériau de support.

19. Procédé selon l'une des revendications précédentes, **caractérisé en ce que** le traitement thermique du matériau de support revêtu de la pâte est réalisé à une température comprise entre 360 °C et 420 °C et pendant un temps de traitement compris entre 120 secondes et 180 secondes.

20. Procédé selon l'une des revendications précédentes, **caractérisé en ce que** directement après le traitement thermique, on réalise une densification, en particulier une densification à chaud, au moyen d'une paire de cylindres, de façon telle que la réduction d'épaisseur de la couche de glissement ne soit pas supérieure à 10 %, sur la base de l'épaisseur de la couche de glissement avant la densification.
